# EUROPEAN PATENT SPECIFICATION

(11) **EP 4 212 004 B1**
(45) Date of publication and mention of the grant of the patent: **25.03.2026**
(21) Application number: 22151576.0
(22) Date of filing: 14.01.2022
(51) Int. Cl.: A01D 41/12, A01D 41/127

(54) **CONTROLLER FOR AND METHOD OF CONTROLLING A HARVESTER**
STEUERGERÄT UND VERFAHREN ZUR STEUERUNG EINER ERNTEMASCHINE
ORGANE DE COMMANDE ET PROCÉDÉ DE COMMANDE D'UNE MOISSONNEUSE

(43) Date of publication of application: 19.07.2023
(73) Proprietor: CNH Industrial Belgium N.V., 8210 Zedelgem (BE)
(72) Inventor: Leenknegt, Arno, 8830 Hooglede (BE); Missotten, Bart M.A., 3020 Herent (BE); Jongmans, Dré W.J., 4791 AG Klundert (NL); Duquesne, Frank R.G., 8550 Zwevegem (BE); Tallir, Frederik, 8600 Esen (BE); Vanlerberghe, Jasper, 8211 Aartrijke (BE); Deruyter, Lucas, 8830 Gits (BE)
(74) Representative: CNH Industrial IP Department

(56) References cited:
- EP-A1- 2 111 739
- EP-A1- 3 504 958
- WO-A1-2020/065003
- GB-A- 2 057 837

## Description

### Background of the Invention

The invention relates to a controller and a method for controlling a harvester, particularly a combine harvester, also called a combine.

As is well known, a combine harvester is a vehicle that moves in a field of crop for the purpose of harvesting the crop, which typically comprises a cutting, threshing and cleaning process that takes place predominantly in the body of the combine harvester.

A header assembly, e.g. a grain header including a cutter bar and reel, protrudes from the forwardmost end of the combine harvester for the purpose of cutting crop in a field and feeding it towards a crop elevator in the feeder again located at the front of the machine. The purpose of the crop elevator, primarily, is to raise the crop (which at this stage includes grains secured in ears to stem parts) to, initially, the threshing drum(s) of the combine harvester. The threshing drum(s) operate(s) to separate the grains from the remaining crop plant parts according to a *per se* known action.

When a combine harvests crop, the desirable crop or grain is separated from the remainder of the plant matter (e.g. the remainder of the crop plant which can include straw, chaff, husk, cob, etc, depending on the crop being harvested) and collected in the onboard grain tank, which is periodically unloaded, for example in a grain cart that pulls up along the combine, via the spout. This remaining plant matter is called "residue" or "crop residue". This residue is typically returned to the field by way of a spreader so that the nutrients can be reclaimed by the field. The spreader is a device at the rear of the combine that typically spreads the residue behind the combine in a substantial uniform manner.

Processing a stream of crop residue, especially the straw, is challenging, as parts of the crop residue stream can get clogged in the residue processing system, for example by so-called "bridging" of the straw. When this happens, the combine harvester starts to fill up with residue. If the operator notices this too late, the combine can get blocked up with residue, requiring a time-consuming cleaning process. Such crop residue blockages can lead to increased wear and even failure of the combine harvester. For example, when residue gets clogged in the residue processing system, the cleaning section can fill up, which might lead to excessive pressure on the sieves and other components, leading to increased wear or even failure. When this happens, cleaning of the harvester's interior may no longer be sufficient, and expensive and time-consuming repairs may be necessary.

EP 2 111 739 A1 discloses a system and method of controlling a combine harvester wherein the engine drives the harvester and additionally powers a threshing mechanism for separating harvested crop into grain and crop residue and at least one further crop processing subsystem that may be selectively configured and disengaged.

GB 2 057 837 A discloses an apparatus for controlling the forward speed of a harvesting combine comprising means responsive to the torque in a drive for a harvesting unit of the combine, means for sensing the grain loss at a straw separating unit of the combine and means responsive to the speed of a ground wheel of the combine.

It is an aim of the present disclosure to solve or at least overcome one or more problems of the prior art.

### Summary of the Invention

Aspects and embodiments of the disclosure provide a controller and a method for controlling a combine harvester as claimed in the appended claims.

According to a first aspect, there is provided a controller for a harvester configured to:
receive crop intake data representative of a current or future flow of crop through the harvester;
receive residue output data representative of a flow of crop residue discharged by the harvester;
determine a blockage status signal on the basis of a comparison between the crop intake data and the residue output data; and
inform a user of the harvester and/or set one or more properties of the harvester based on the blockage status signal.

Such a controller can enable a blockage in the harvester to be quickly identified such that any remedial action be taken efficiently without unduly affecting a harvesting operation.

The controller may be configured to compare the crop intake data and the residue output data by:
determining, on the basis of the crop intake data, expected residue output data representative of an expected flow of crop residue that should be discharged by the harvester under current working conditions, when processing a flow of crop represented by the crop intake data; and
comparing the residue output data to the expected residue output data.

The controller may be configured to compare the residue output data to the expected residue output data by:
determining an expected residue output data value on the basis of the crop intake data received at a first time;
determining a time delay value representative of a time required to process a flow of crop represented by the crop intake data until the corresponding crop residues are discharged by the harvester;
determining a residue output data value on the basis of the residue output data received at a second time, said second time being offset from the first time by the time delay; and
comparing the residue output data value to the expected output data value.

The controller may be configured to compare the crop intake data and the residue output data by:
determining a difference between a crop intake data value and a corresponding residue output data value;
comparing the difference to a blockage threshold; and
determining a blockage status signal indicative of a blockage within the harvester if the difference exceeds the blockage threshold.

The crop intake data may comprise, or be based on, one or more of:
an engine load of the harvester;
a load on and/or speed of a header auger of the harvester;
a load on and/or speed of a draper belt of the harvester;
a ground speed of the harvester;
a harvesting width of the harvester;
a current feed rate of the harvester;
a flow (rate) of separated grain;
combine location data and field data representative of the crop density in the field being harvested; and
crop characteristic data, such as moisture data.

The crop intake data may comprise left-side data representative of a current or future flow of crop through a left-side of the harvester and right-side data representative of a current or future flow of crop through a right-side of the harvester.

The residue output data may comprise, or be based on, one or more of:
signals and/or images provided by one or more residue sensors;
load acting on a component of a residue spreading system of the harvester;
rotor speed and/or torque and/or power of a residue spreading system of the harvester; and
load acting on deflector doors of a residue spreading system of the harvester.

The one or more residue sensors may include a radar residue spreading sensor configured to determine a residue spreading coverage.

The residue output data may be provided by a plurality of sensors. The controller may be configured to determine a weighted average on the basis of a predetermined weighting factor assigned to each of the residue output data signals provided by the plurality of sensors.

The controller may be configured to change one or more of the following harvester properties if the blockage status signal is indicative of a blockage within the harvester:
a ground speed of the harvester;
speed of a chopper of the harvester;
speed of a spreader of the harvester; and
a position of spreader doors of the harvester.

The controller may be configured to create a log instance when the blockage status signal is indicative of a blockage within the harvester, wherein the log preferably comprises one or more of the following:
GPS coordinates of the harvester;
time and date information;
crop characteristics;
field data representative of ground contours of the work area;
environmental conditions;
harvester type/model; and
harvester operating parameters.

The controller may be configured to determine an amount of crop residue that has accumulated in the harvester if the blockage status signal is indicative of a blockage within the harvester.

The controller may be configured to:
monitor if previously accumulated crop residues have been discharged by the harvester; and
set one or more properties of the harvester that have previously been changed in response to a blockage status signal that is indicative of a blockage within the harvester to a default value if the accumulated crop residues have been discharged by the harvester.

The controller may be configured to inform the user of the harvester based on the blockage status signal by providing a notification to the user on a display.

According to a further aspect, there is provided a method of controlling a harvester comprising:
receiving crop intake data representative of a current or future flow of crop through the harvester;
receiving residue output data representative of a flow of crop residue discharged by the harvester;
determining a blockage status signal on the basis of a comparison between the crop intake data and the residue output data;
setting one or more properties of the harvester based on the blockage status signal.

According to another aspect of the present disclosure, there may be provided a harvester comprising a controller as described above. Alternatively, the harvester may be connected remotely to a controller as described above.

According to another aspect of the present disclosure, there may be provided a computer program, which when run on a computer, causes the computer to configure any apparatus, including a controller, disclosed herein or perform any method disclosed herein. The computer program may be a software implementation, and the computer may be considered as any appropriate hardware, including a digital signal processor, a microcontroller, and an implementation in read only memory (ROM), erasable programmable read only memory (EPROM) or electronically erasable programmable read only memory (EEPROM), as non-limiting examples. The software may be an assembly program.

The computer program may be provided on a computer readable medium, which may be a physical computer readable medium such as a disc or a memory device or may be embodied as a transient signal. Such a transient signal may be a network download, including an internet download.

The controller may be located remotely, e.g. in a farm office, and configured to control one or more harvesters remotely. Accordingly, the harvester may include one or more communication interfaces for connection to a remote processor and/or a remote controller.

### Brief Description of the Drawings

There now follows a description of preferred embodiments of the invention, by way of non-limiting example, with reference being made to the accompanying drawings in which:
Figure 1 shows a schematic side view of a combine harvester;
Figure 2 shows a schematic top plan view of a combine harvester in a field;
Figure 3 shows a block diagram of a method according to an embodiment of the present disclosure;
Figures 4 to 7 show various diagrams comparing an expected residue output flow rate to an actual residue output flow rate; and
Figure 8 shows a block diagram of a method according to an embodiment of the present disclosure.

### Detailed Description of the Drawings

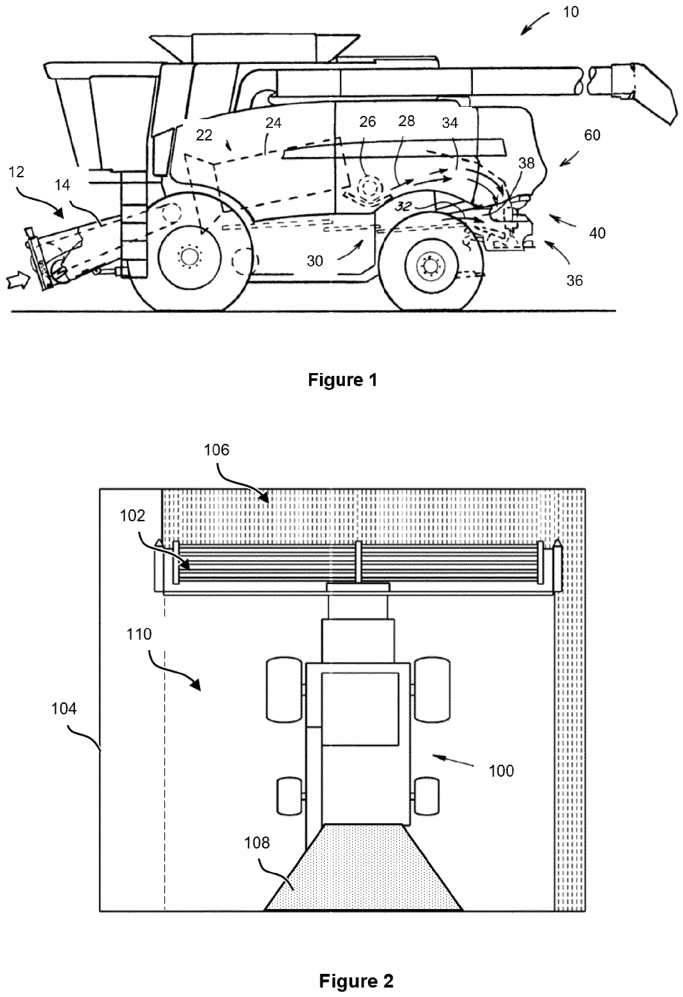

Referring now to FIG. 1 of the drawings, a harvester, in particular a combine harvester 10 is shown. The combine harvester 10 comprises a feeder 12 at a front end to carry a header (not shown). The header includes a cylindrical header reel (not shown) that rotates and directs crop material from growing crops being cut onto the header, the header directs the cut crop material towards a feeder 12 that will supply the cut crop material to the other systems of the combine harvester 10, typically by using a conveyor 14 in the feeder 12..

The combine harvester 10 comprises a threshing system 22 arranged behind the feeder 12. The threshing system 22 includes a rotor 24 rotatable for separating straw stalks and other plant residue, generally referred to as straw 28 or straw residue below, from the harvested crop.

The combine harvester 10 also comprises a chopper 26 rotatable for chopping and propelling a flow or stream of straw 28 rearwardly along an airborne trajectory through a rear cavity 34 enclosed by structural sheets of the combine harvester 10.

The combine harvester 10 comprises a cleaning system 30 for receiving the harvested crop from threshing system 22 and removing chaff and any other remaining residue, including seed pods, husks, and the like, generally referred to as chaff 32 or chaff residue, from the grain and directing a flow or stream of chaff 32 rearwardly through a lower region of rear cavity 34, towards a lower opening 38.

A horizontal residue spreader assembly 36 is located in the rear cavity 34. The spreader assembly 36 comprises a crop residue distribution system 40, e.g. including two side-by-side spreader disks or impellers configured for rotation in opposite directions about generally vertical rotational axes. The crop residue distribution system 40 may also include pivotably supported deflector doors located at a rear end 60 of the rear cavity 34. The deflector doors may be pivotable between a closed position and an open position, to control spreading of the straw 28 and chaff 32, collectively referred to as crop residue (also known as "material other than grain" or MOG), behind the combine harvester 10.

Figure 2 shows a schematic plan view of a combine harvester 100, harvesting crop in a field 104. The combine harvester 100 comprises a header 102 discussed above. The header 102 is arranged at the front of the harvester 100 and collects crop 106 that is in front of the harvester 100. The combine harvester 100 reaps the crop 106 in working rows 110, one of which is shown in Figure 2. In this way, the combine harvester 100 performs a plurality of passes in a field as it reaps the crop 106 in the plurality of working rows 110.

As discussed before, crop that is inserted into the combine harvester 100 will be separated into grain and MOG (Material Other than Grain) with the MOG being discharged by the combine harvester 100 as so called crop residue 108. The crop residue 108 is spread by the spreading system of the combine harvester 100 typically in such a way that the entire width of the working row 110 behind the combine harvester 100 is covered.

The so spread crop residue 108 can be used as a fertilizer for the next season. Processing the stream of residue, especially the straw, is challenging, as parts of the residue stream can get clogged in the residue processing system, for example by so-called "bridging" of the straw. When this happens, the combine harvester 100 starts to fill up with residue. If the operator notices this too late, the combine can get filled up with residue, requiring a time-consuming cleaning process. As the machine fills up with residue further, systems, like for example the cleaning system, can get blocked, or overloaded, leading to increased wear and even failure. When this happens, cleaning of the harvester's interior may no longer be sufficient, and expensive and time-consuming repairs may be necessary.

In order to ameliorate the above problem, the present disclosure suggests a method and a controller for controlling a combine harvester.

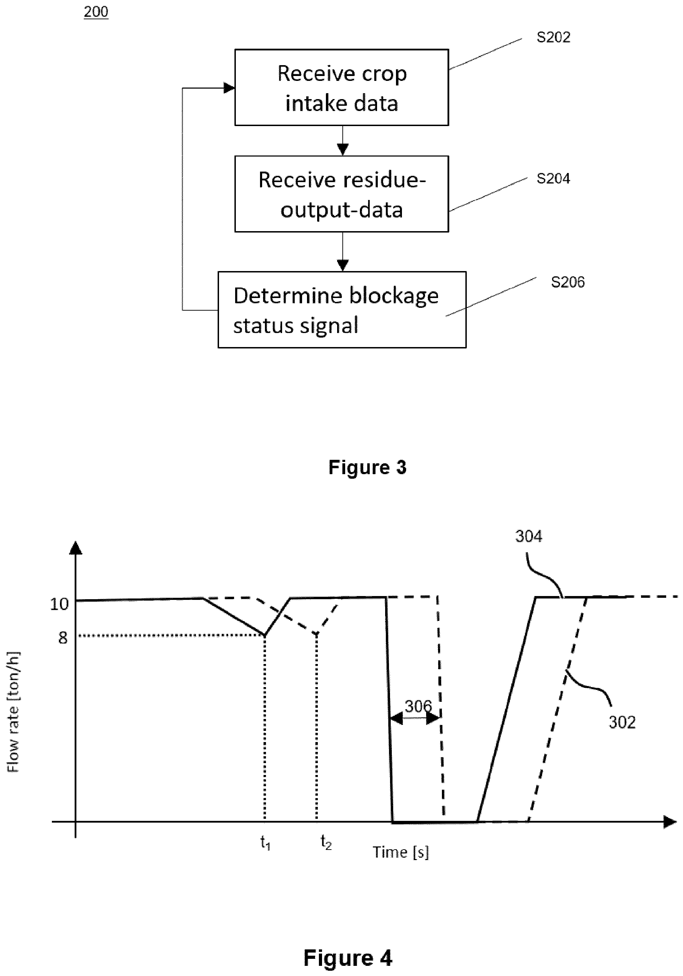

Figure 3 shows a flow chart of an embodiment of the disclosed method. The method 200 illustrated in Figure 3 comprises a first step S202 for receiving crop intake data. The crop intake data is representative of a current or future flow of crop through the harvester. In other words, the crop intake data is representative of an amount of crop that is, will be, or has been fed into the harvester over time. In one example, the crop intake data may be a weight change within the grain tank over time, e.g. measured by a grain mass flow rate sensor. For instance, the amount of grain in the grain elevator can be measured with a dedicated grain flow sensor. A grain elevator brings the clean grain from the sieves up into the grain tank. A controller may store the grain flow rate over time in a suitable memory. Various other examples of crop intake data are disclosed below.

In a second step S204, the method comprises receiving residue output data. The residue output data is representative of a flow of crop residue discharged by the harvester. In other words, the residue output data allows a controller to determine the amount of crop residue that has been spread or will be spread by the combine harvester onto the field over time. One example of suitable residue output data may be signals and/or images provided by one or more crop sensors, such as residue spreading sensors, for example ultrasonic, acoustic, radar, lidar or camera sensors which are often arranged at the rear of the combine harvester to ensure that the residue is deposited homogenously onto the field behind the harvester. A controller receiving image data as part of the residue output data, may use image recognition techniques to determine the current flow of crop residue discharged by the combine harvester. The controller may store the crop residue flow rate over time in a suitable memory.

In a third step S206, the method comprises determining a blockage status signal. The blockage status signal is determined on the basis of a comparison between the crop intake data and the residue output data. In the above example, both the crop intake data and the residue output data are utilised by the controller to determine a flow of crop, i.e. a flow into the harvester and a flow of crop residue being discharged by the harvester over time.

As will be described in more detail below, the controller may compare the two flow rates with each other to determine any potential discrepancy between the two. In particular, if the intake flow rate is significantly higher than the discharge flow rate, the controller may determine that a blockage has occurred within the harvester, because a larger amount of residue would have been expected on the basis of the amount of crop taken in, such that some of the crop is likely stuck within the machine. "Significantly higher" in this context may mean that a control unit will compare a difference between the crop intake flow rate and the crop residue output (or discharge) flow rate to a blockage threshold. In this regard, it will be appreciated that, during normal operation, a higher crop intake mass flow rate is expected, as the residue output flow rate no longer includes the weight of the grain. Yet, it should be noted that there are cases in which the crop residue output flow rate is higher than expected in view of the crop intake flow rate may also occur, e.g. after a (temporary) blockage has loosened and is expelled by the harvester.

In one example, the blockage status signal may simply contain information regarding whether or not a blockage has occurred. In other examples, the blockage status signal may also include a measure of the severity or location of the blockage as well as other types of information discussed below.

The method may comprise various remedial actions on the basis of the blockage status signal, which will be discussed in detail below. In some cases a controller may be configured to inform the operator of the harvester of the blockage. In other examples, a controller may automatically change one or more properties (or operating conditions) of the harvester in response to a blockage.

As will be understood, the crop intake flow rate, determined on the basis of the crop intake data, will typically be higher than the residue output flow rate, determined on the basis of the residue output data. This is because the crop residue output does not include the grain of the harvested crop. In particular, the residue output mass flow rate will be roughly equal to the intake flow rate, minus the mass flow rate of the grain into the tank if no blockages occur within the harvester. If the field and crop conditions do not change during the harvesting process, the relationship between the crop intake flow rate and a corresponding residue output flow rate will typically be constant. Accordingly, the controller may determine an expected residue output flow rate based on the actual crop input flow rate, e.g. by multiplying the crop intake flow rate with a conversion factor. The conversion factor takes may take into consideration the reduction in mass flow rate when the grain is removed and only the residue remains. The conversion factor may be in the region of 0.4-0.8 in some circumstances, or in the region of 0.75-0.95 in other circumstances, as non-limiting examples. There can be a huge variation in what is considered a typical conversion factor, for example depending on crop type and region. It can also strongly depend on whether the conversion factor is applied to volume or mass. In some of the examples disclosed herein, using volumetric flow rate can be particularly beneficial for identifying blockages. The conversion factor may be determined empirically and will be heavily dependent on the crop properties (e.g. heavier/lighter grains, straw, etc.) and the field conditions (e.g. wet/dry field, etc.).

In other examples, the crop intake data may comprise both a flow of crop being fed into the harvester and the amount (e.g. weight) of grain collected over time as a result of processing said crop. The controller may then simply subtract the grain mass flow rate from the crop mass flow rate to determine an expected residue output mass flow rate.

According to the above, the controller may determine, on the basis of the crop intake data, expected residue output data that is representative of an expected flow of crop residue that should be discharged by the harvester under current working conditions, i.e. based on the identified amount of crop that is coming into the harvester, assuming that no blockage has occurred. The controller may compare the so determined, expected residue output data to the crop residue output data received by the controller (e.g. via the crop residue spreading sensor) - referred to as "actual crop residue data" hereinafter. In particular, the controller may compare the actual flow of crop residue discharged by the harvester with the expected flow of crop residue.

Turning to Figure 4, there is shown a schematic diagram showing exemplary, actual crop residue output flow rates (determined on the basis of the crop residue output data) as compared to expected residue output flow rates determined by the controller on the basis of the crop intake data. In this simplified example, there is no blockage and the measured, actual residue output flow rate 302 is identical to the expected residue output flow rate 304. As illustrated in Figure 4, the two flow rates 302, 304 are, however, offset in time from each other. This is because there will be a time delay between intake of new crop and discharging the corresponding crop residue at the rear of the harvester. An exemplary time delay 306 is derivable from Figure 4.

It will be appreciated that the time delay 306 is dependent on the type of crop intake data utilised to determine the expected residue output data/flow rate. For example, if a flow rate of separated grain into the tank is used to determine the amount of crop intake inserted into the harvester, then the time delay may be relatively short since crop residue is ejected very shortly after it has been separated from the grain. Moreover, in some example, the flow rate of the separated grain is determined by measuring the weight change in the grain tank over time. In this case, separated grain will need to enter the grain tank first, before a corresponding crop intake flow rate can be determined, by which time the crop residue corresponding to the weighed grain may already be very close to being discharged at the rear end of the harvester.

In other examples, the intake data may comprise images of the field ahead of the harvester to determine how much crop will be taken in at the current speed of the harvester. In this scenario, the time delay between the crop in front of the harvester being introduced into the harvester and the corresponding residue being expelled from the harvester will be significantly longer than the time delay of the previous example.

The controller may be configured to determine the time delay 306 on the basis of the type of crop intake data utilised. To this end, the controller may have access to a database correlating the different types of crop intake data with a typical time delay. In other examples, the controller may perform a step for determining the time delay, e.g. by marking some of the straw/chaff before it is processed and identifying the duration until the marked chaff is ejected and determined by an image sensor on the rear of the harvester.

The controller may be configured to determine an expected residue output data value on the basis of the crop intake data received at a first time t₁ In the example of Figure 4, the expected residue output data value at time t1 is 8 tons/h. The controller may also be configured to determine the time delay 306 representative of a time required to process a flow of crop represented by the crop intake data until the corresponding crop residues are discharged by the harvester, as set out before. The controller may then determine a corresponding actual residue output data value on the basis of the actual residue output data at a second time t₂. The second time is offset from the first time by the time delay 306. In the example of Figure 4, the actual residue output data value at time t2 is also 8 tons/h. The controller may thus determine that the expected and actual residue output flow rates are identical at and generate a blockage status signal that is "FALSE" meaning that there is currently no blockage present.

The controller may be configured to carry out the above comparison of the expected residue output flow rate and the actual residue flow rate by shifting one of the expected residue output data and the actual residue output data so as to align the two. In one example, the controller may utilise the time delay to shift one of the two flow rates. Well known signal processing techniques like auto-correlation can be used.

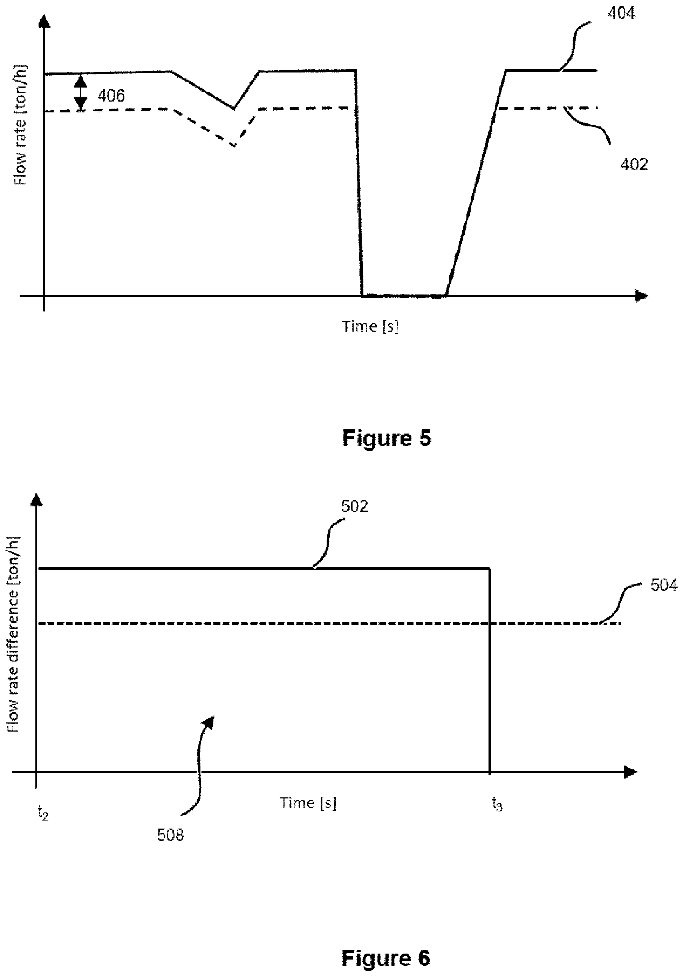

In the example of Figure 5, the actual output flow rate 402 has been shifted to align with the expected residue output flow rate 404. In more detail, the actual output flow rate 402 in Figure 5 was offset to the left by a time delay discussed above. In contrast to the example shown in Figure 4, Figure 5 shows a situation, in which the actual residue output flow rate 402 differs from the expected residue output flow rate 404. The difference is shown by arrow 406 in Figure 5. The difference between the two flow rates may be due to a blockage within the harvester. It should be appreciated that the graph in Figure 5 is heavily simplified. In reality, the difference between the actual residue output flow rate and the expected residue output flow rate may differ over time. In particular, if a blockage has started, it is often the case that the difference between the two flow rates becomes larger over time meaning that the crop stuck within the harvester will accrue at an increasing rate once a blockage has started. This is because once a blockage has occurred, more and more crop residue will accumulate within the harvester, thereby continuously reducing the amount of actual crop residue discharged by the harvester. In extreme cases, the harvester may be completely blocked, such that no more crop residues can be expelled, a situation in which damage to the harvester can occur very quickly.

Turning back to Figure 5, the difference between the expected residue output flow rate and the actual residue output flow rate remains constant. The controller may be configured to determine a difference between the expected residue output flow rate and the actual residue output flow rate.

An example of a difference 502 between the expected residue output flow rate and the actual residue output flow rate plotted over time is shown in Figure 6. Similar to the embodiment shown in Figure 5, the difference between the two flow rates in Figure 6 remains constant between times t₂ and t₃. The controller may be configured to compare the difference 502 between the two flow rates to a blockage threshold 504. If, as is the case in the example of Figure 6, the difference between the two flow rates 502 exceeds the blockage threshold 504, the controller may be configured to generate a blockage status signal indicative of a blockage being present (e.g. "TRUE") within the harvester. If, however, the difference between the two flow rates remains below the blockage threshold 504 (not shown), then the difference between the two values may be acceptable and the controller may be configured to generate a blockage status signal indicating that no blockage has been determined.

The controller may be configured to determine an amount of crop residue that has accumulated in the harvester if the blockage status signal is indicative of a blockage being present within the harvester. In other words, the controller may be configured to identify and add up every time the difference 502 exceeds the blockage threshold 504. In the example of Figure 6, the difference between the expected residue output flow rate and the actual residue output flow rate remains above the blockage threshold 504 between times t₂ and t₃. At time t₃, the blockage may have been resolved or the harvester simply been stopped, such that the difference 502 falls below the blockage threshold 504. The controller may be configured to determine the amount of crop that is expected to be stuck within the harvester as a result of the difference 502. To this end, the controller may add up the times in which the flow rate difference 502 remained above the blockage threshold 504, i.e. determine the area 508 under the graph shown in Figure 6 (e.g. by integration).

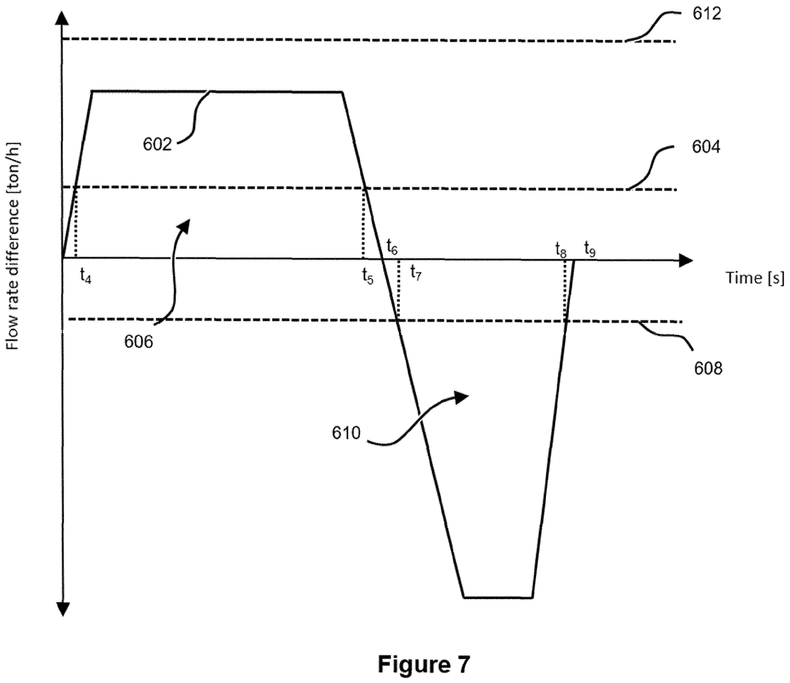

In some embodiments, the controller may also be configured to determine a blockage status signal that includes the expected amount of crop (i.e. the area 508 under the graph in Figure 6) as part of the blockage status signal. In some embodiments, the controller may be configured to inform the user of a potential blockage or take remedial action as soon as the difference 502 exceeds the blockage threshold 504. In other examples, the controller may be configured to inform the user/take remedial action only if the amount of crop that has accumulated within the harvester exceeds a crop level threshold (not shown). This is because, in some cases, blockages within the harvester may occur intermittently for short periods of time and resolve themselves without the need for cleaning or other action by the operator. Such an example is shown in Figure 7.

Figure 7 shows an exemplary scenario in which a temporary blockage resolved itself and hence does not require an operator's action. The graph in Figure 7, again, shows the difference 602 between the expected residue output flow rate and the actual residue output flow rate. At a time t₄, the difference 602 between the flow rates exceeds a first blockage threshold 604. At this stage, the controller will start to monitor the amount of crop residue accumulating within the harvester, similar to what has been described with reference to Figure 6. The controller may be configured to keep adding up the amount of crop residue accumulated within the harvester until a time t₅, at which the difference between the flow rates 602 falls below the first blockage threshold 604 again. The amount of crop residue accrued within the harvester during this period of temporary blockage (between t₄ and t₅) is represented by the area 606. The controller may then compare this amount of accumulated crop residue within the harvester to the crop level threshold mentioned above. In the case of Figure 6, the amount of crop residue within the harvester does not exceed the crop residue level threshold and so the controller may not take any further action, i.e. may not inform the user and/or may not set one or more properties of the harvester. At a time t₆, the flow rate difference 602 between the expected residue output flow rate and the actual residue output flow rate becomes negative, meaning that the actual residue output flow rate has now exceeded the expected residue output flow rate. As mentioned above, this may be the case if an existing blockage within the harvester is dislodged and discharged together with any new crop residue being processed by the harvester. As can be seen, the flow rate difference 602 remains negative between times t₆ and t₉. As will be appreciated, the gradients of the flow rate difference 602 between times t₆ and t₉ is higher than the gradients of the difference 602 between times t₄ and t₅. This is to illustrate that blockages tend to accrue continuously, whereas, when a blockage is dislodged, large amounts of crop residue are discharged over a comparatively short period of time.

Similar to what has been described with reference to the blockage threshold 604 above, the controller may be configured to compare the flow rate difference 602 to a crop residue dislodging threshold 608. This may, again, be arranged to disregard measurement errors in the flow rates of the expected crop residue output flow rate and the actual residue output flow rate. The controller may be configured to monitor the amount of extra crop residue (i.e. crop residue over what is expected) discharged as soon as the difference 602 between the flow rates falls below the dislodging threshold 608. Of course, it will be appreciated that the controller may also compare the absolute value of the difference 602 to a dislodged threshold 608, in which case it may start monitoring the extra crop residue discharge as soon as the dislodging threshold 608 is exceeded by the flow rate difference 602. In the example of Figure 7, the controller may, thus, add up any extra crop residue discharged between times t₇ and t₈, i.e. by determining the area 610.

In some scenarios, the amount of crop residue accumulated within the harvester and determined by the controller, (e.g. area 606), exceeds the residue level threshold (not shown) such that the controller may generate a blockage status signal to inform the user of a blockage within the harvester and/or set one of the properties of the harvester, such as a reduction of the ground travel speed of the harvester to counteract the blockage. At time t₇, i.e. when the difference of the two flow rates falls below the dislodging threshold 608, the controller may continuously subtract the amount of crop residue discharged from the harvester from the amount of crop residue accumulated within the harvester and represented by area 606. Eventually, the controller may subtract the amount of crop represented by the area 610 from the accumulated amount of crop represented by the area 606. The controller may determine that the difference between the two areas 606, 610 is below the blockage threshold, such that there are no longer significant amounts of crop residue stuck within the harvester and the blockage has been resolved. Accordingly, the controller may change the blockage status signal as soon as the difference between the two areas 606, 610 indicates that the amount of crop residue within the harvester is below the blockage threshold. In one example, the controller may thus inform the user of the harvester that the blockage has been resolved and/or change one or more properties of the harvester, such as the ground speed, to a default/preferred value.

In the above example, if the controller is configured not to take remedial action as soon as the first blockage threshold 604 is exceeded, the controller may be configured to also compare the flow rate difference 602 to a second blockage threshold 612 that is higher than the first blockage threshold 604. The second blockage threshold 612 may be determined by the manufacturer to be set at a flow rate difference that could lead to machine damage within a very short period of time, such that immediate remedial action is required to avoid machine failure. In one example, therefore, the controller may be configured to set one or more properties of the harvester as soon as the second blockage threshold 612 is exceeded. In some embodiments, the controller may be configured to stop the harvester as soon as the flow rate difference 602 exceeds the second blockage threshold 612. In this scenario, the controller may not even determine the amount of crop residue accumulated within the harvester.

In another embodiment, the controller is configured to take remedial action when the amount of crop residue within the harvester, determined as the integration over time of the difference 602, exceeds a certain threshold corresponding to a certain critical situation. For example, a risk of filling up the residue system such that it requires extensive cleaning, a risk of filling up of the cleaning section such that it requires even more extensive cleaning, and a risk of damage to the cleaning section.

For all embodiments, feedback can be given to an operator based on a determined blockage status signal, in particular in response to the blockage status signal representing an identified blockage. When a blockage is detected, an alarm can be given to an operator. This can be an audible alarm and/or a visual alarm, for example a notification on a display. This can be a very effective way to give the operator good feedback. Especially because it can enable improved continued performance of the harvester. The audible alarm can be varied depending on the severity of the risk of blockage, for example by varying the tone sequence, pitch or volume. In case of a blockage, the severity of the blockage can be communicated to the operator, for example by a certain message and/or symbol on a display. A color scale can be used for easy understanding, like a traffic light alike representation, green is ok, orange is risk of blockage/initial blockage, red is blockage. It is also possible to communicate the position and/or extent of the blockage, for example by marking a zone of the crop flow, for example with a colour and/or pattern, on a graphical representation of the combine, for example a simplified cross-section showing the major working components.

### Crop Intake Data

Above, the general concept of the present disclosure has been explained as relating to a comparison of an amount of crop/the flow rate of crop being taken into the harvester with the residue output amount/flow in order to determine whether a blockage within the harvester may have occurred. As mentioned in some detail above, the determination of the intake crop flow is generally based on crop intake data that is representative of a current or future flow of crop through the harvester. The crop intake data may either be measured or estimated data. Some non-limiting examples of crop intake data comprise, or can be based on, the following:
In one example, the crop intake data may comprise the engine load of the harvester. The engine load can be measured or estimated based on engine speed, engine torque, fuel consumption, noise/vibration level and/or air intake. As will be appreciated, the engine load of the harvester will change with resistance to travel, e.g. caused by the amount of crop being processed by the harvester at any point in time. The engine load can be corrected for other factors not directly related to the crop intake, for example the required motive power for the terrain the combine is driving on, including soil condition, for example wet-dry, and presence of slopes, or for example the weight of the accumulated crop in the grain tank. Accordingly, a controller may be configured to determine a change of crop flow entering the harvester on the basis of engine load measurements. To this end, the controller may compare the measured engine load to a reference engine load value that has previously been calibrated to the particular type of crop, the machine/header configuration and machine settings/operating parameters. The controller may, thus, be calibrated to determine that, at the reference engine load, a certain amount of crop intake flow occurs. The controller may then extrapolate any increase or decrease in engine load compared to the reference engine load with a corresponding increase or decrease of the crop flow through the harvester.

In another embodiment, the crop intake data may comprise a load and/or speed of a header of the harvester. As will be appreciated, the increased crop intake will increase the load on the header auger of the harvester and, potentially, reduce the speed of rotation and/or increase the torque. Similar to the engine load discussed above, the controller may be calibrated with a reference auger load/speed of rotation/torque that occurs during times of average crop intake flow. Accordingly, the controller may determine the crop intake flow on the basis of a variance between the reference load/speed and the actual load/speed measured for the header auger. Similarly, the crop intake data can comprise (or can be based on) a load on and/or speed of a draper belt of the harvester.

In another embodiment, the crop intake data may comprise a ground speed of the harvester. Generally, the amount of crop intake will vary with the forward/ground speed of the harvester, such that a controller may be configured to estimate the crop intake flow rate on the basis of a ground speed measurement. In this example, the controller may be provided with the harvesting width achieved with the header in use. On the basis of the harvesting width and the ground speed of the harvester (i.e. the crop intake data), the controller will be able to determine a corresponding crop intake flow rate.

In another example, the crop intake data may comprise feed rate measurements of the harvester. The feed rate can be measured in the feeder, for example by measuring the crop layer thickness and crop speed.

In another embodiment discussed above, the crop intake data may comprise an amount of separated grain, for instance a flow (rate) of separated grain flowing into the grain tank. The amount of separated grain may, for example, be determined as the weight of the grain being deposited into the grain tank over time. Based on the amount of grain deposited into the grain tank over time, the controller may be configured to determine the corresponding amount of crop that was taken into the harvester in order to achieve such a flow of separated grains. In this example, the controller may be configured to divide the weight of the grain over time by a percentage that represents the ratio of grain to crop residue in the harvested crop type. If, for example, the crop intake data received by the controller suggests that ten ton of separated grains are received in the grain tank per hour, and the weight of the grain makes up 40 percent of the total weight of the crop (i.e. the grain and the residue), then the controller may determine the crop intake flow rate as one ton per hour divided by 0.4, equalling twenty five ton of crop intake per hour.

In yet another embodiment, the crop intake data may comprise field data representative of characteristics of the area to be worked such as the crop density in the field being harvested. In some examples, the field data may be contours of the field that are either determined on the go, e.g. via cameras or satellite images, or have previously been determined and stored in a map database. The controller may be configured to use the contours of the field to predict the ground speed of the harvester during operation. In particular, it will be appreciated that any uphill section within the field will decrease the ground speed of the harvester and, thereby, decrease the crop intake flow rate, whereas downhill sections may increase the ground speed of the harvester and, thus, increase the intake flow rate. Similarly, the controller may use the field data to determine when the harvester will reach the headland for turning and, thus, will temporarily take in no further crop. In other examples, the field data may, additionally or alternatively, include information about the crop flow rate achieved in certain parts of the field in previous years. In such cases, the controller may use GPS data to locate the harvester within the field and determine the expected intake flow rate on the basis of flow rates achieved in the same part of the field in previous years.

In yet another example, the crop intake data may comprise crop characteristic data. A crop characteristic data may include a type of crop, moisture levels of the crop being harvested, or crop density. Crop characteristic data may either be input directly by the operator or automatically measured by the harvester on the go. For example, the combine harvester may have a front camera configured to determine the crop density of the crop directly in front of the harvester. The controller will be configured to utilise the crop characteristic data in connection with the ground speed of the harvester in order to determine the amount of crop intake flow during the harvesting process.

In some examples, the crop intake data may comprise left-side data representative of a current or future flow of crop through a left-side of the harvester and right-side data representative of a current or future flow of crop through a right-side of the harvester. In one example, the controller may receive crop intake data, particularly load data from the left and right side header augers or header belt (in case of draper header) in case of a twin-rotor or rotary separator. Alternatively, the crop intake data may comprise crop layer thickness/density and/or crop speed measurements within the feeder separated into a left and right side of the header arrangement, so as to produce left-side and right-side data for the controller. In yet another embodiment, front facing sensors arranged at the front of the harvester may be used to determine the future crop intake on a left-side and a right-side of the harvester. Such sensors may be radar, lidar, or photo sensors. Other examples of the left-side data and right-side data may include pressure/force measurements on the counter knives of the chopper. Such pressure/force measurements may be taken across the width of the counter knives and separated into left-side pressure/force data and right-side pressure/force data. Finally, the separation of left and right parts of the machine may be achieved by field data collected in previous runs of the work area or on the go via front sensors/drones/satellites.

Separating the crop intake data into left-side data and right-side data provides a more accurate determination of where a potential blockage may have occurred. This, in turn, will help the operator locate the issue more quickly and, therefore, reduce downtime of the harvester.

### Crop Residue Output Data

The controller may not only receive a variety of crop intake data, but also various different types of crop residue output data. Below is a non-exclusive list of residue output data that may be received by the controller and is representative of a flow of crop residue discharged by the harvester. The residue output data may comprise, or be based on, one or more of the examples described below.

In a first example, the residue output data may comprise signals and/or images provided by one or more residue sensors. Such signals/images may be produced by a camera (conventional or stereo), lidar, ultrasonic, radar system either attached to the harvester or an auxiliary device, such as a drone. The residue sensors may be arranged so as to take images of the rear end of the harvester to record the crop residue being spread as it leaves the harvester. The controller may then process the images by means of image recognition techniques in order to determine a crop residue flow rate. To this end, the controller may be calibrated with a crop residue collection trailer pulled by the harvester during operation. Such a measurement trailer may collect the residue discharged by the harvester and thus be configured to determine the mass of crop residue discharged over time during operation. The controller may then correlate the images received from the image sensor with the mass flow rate determined via said calibration trailer.

In another example, the residue output data may comprise load acting on a component of a residue spreading system of the harvester. In particular, the residue output data may be the load or torque on the one or more impellers used to distribute the crop residue across the field behind harvester. It will be appreciated that the load experienced by the impellers of the residue spreading system will be higher the more crop residue is produced by the harvester and spread by the system. Similarly, in another embodiment, the residue output data may include a rotor speed and/or torque and/or rotor power of the residue spreading system.

In another embodiment, the residue output data may comprise load acting on deflector doors of a residue spreading system of the harvester. Again, the more crop is distributed by the residue spreading system, the higher the loads will be that act on the deflector doors for directing the crop residue across the full width of the working rows. The controller may be configured to compare any load measurements of the deflecting doors to a reference load value of known crop residue output flow rates in order to estimate the actual residue output flow rate.

The residue output data may also be determined by measuring the vibration of one or more components of the residue spreading system, and/or by measuring the sound produced by the interaction of the residue with one or more components of the residue spreading system. Signal processing can be applied to the measured vibration/sound to reduce noise and/or filter so that the residue output flow rate can be estimated by comparing the processed signal with certain reference or calibration data.

The residue output data received by the controller may include more than one type of data for redundancy and increased accuracy. For example, the controller may be provided with both image data and load data as described above. The controller may then calculate corresponding residue output flow rates on the basis of each of the residue output data sets. The controller may determine the residue output flow rate as an average of the individual flow rates determined on the basis of the separate types of residue output data.

The above average may be a weighted average. In this embodiment, the controller may be programmed with predetermined weighting factors assigned to each type of residue output data provided by the plurality of sensors. For example, the manufacturer may determine that one type of residue output data is more accurate than another, in which case the controller may be configured to apply a higher weighting factor to this type of residue output data than others when determining the average output flow rate.

### Remedial action

As set out before, in some embodiments, the controller is configured to set one or more properties of the harvesters based on the blockage status signal. In particular, the controller may either be configured to set the properties of the harvester as soon as a difference between the expected crop residue output flow rate and the actual residue output flow rate exceeds a blockage threshold. In other embodiments, the controller may be configured to only change one or more of the harvester's properties if an estimated amount of crop stuck within the harvester exceeds a dislodging threshold as described above.

Below is a non-exclusive list of harvester properties the controller may set on the basis of the blockage status signal. The controller may set one or more of the below harvester properties if the blockage status signal is indicative of a blockage within the harvester.

In one example, the controller may be configured to change the ground speed of the harvester if the blockage status signal is indicative of a blockage. In particular, the controller may reduce the ground speed of the harvester in order to reduce the crop intake flow rate and, thereby, potentially enable the harvester to "catch up" with the crop being fed into the machine. Reducing the ground speed of the harvester not only provides the opportunity for the machine to process any overflow of crop that is stuck within the machine, but also reduces the risk of machine failure significantly, should the harvester not be able to remove the blockage by itself. This is because reducing the speed of the harvester will also slow down the accumulation of crop within the harvester that may ultimately lead to failure of the machinery.

In another embodiment, the controller may be configured to change the speed of the chopper of the harvester if the blockage status signal is indicative of a blockage. In particular, the controller may increase the speed of the chopper in order to try and remove a blockage/increase the residue output until a suspected blockage has been removed.

In yet another embodiment, the controller may be configured to change the speed of the spreader of the harvester if the blockage status signal is indicative of a blockage. Similar to the speed of the chopper, increasing the speed of the spreader by the controller may tip the balance in the direction of residue output, so as to remove potential blockages.

In another example, the controller may be configured to change the position of the spreader doors of the harvester if the blockage status signal is indicative of a blockage. As will be appreciated, fully opening the spreader doors of the harvester may reduce the resistance to crop residue flow and thus increase the amount of crop residue being discharged from the harvester. Of course, fully opening the spreader doors may not generally be desirable, as this may lead to inhomogeneous spreading of the crop residues on the working row behind the harvester. However, the controller may be configured to determine how serious the blockage is, e.g. by means of a comparison of the amount of crop estimated to be stuck within the harvester with a corresponding spreader door threshold and only fully open the spreader doors in case the amount exceeds said spreader door threshold. An (temporary) inhomogeneous spreading of crop residue may still be preferable to potential machine blockage or failure causing downtime.

In other embodiments, the controller may be configured to inform the user of the harvester if the blockage status signal is indicative of a blockage. In one example, the controller may produce an audio signal to warn the user of a potential blockage. The controller may also separately, or in addition to the audio signal, provide a visual warning on a display of the harvester. The visual warning can include an indication of the likelihood and/or severity of the blockage. In other embodiments, the controller may be configured to show the position of the blockage within the machine when the blockage status signal is indicative of a blockage. In particular, the controller may show the warning signal on a display together with a graphical representation of internal parts of the combine harvester. The controller may be configured to highlight the part of the combine harvester that is affected by the blockage.

The controller may be configured to suggest a remedial action when the blockage status signal is indicative of a blockage. The suggested remedial action may be displayed together with the above visual warning or separately therefrom. Some examples of remedial actions that may be proposed by the controller are to decrease the ground speed of the harvester and/or inspect the residue system. Other suggested remedial actions may include changes to the speed of the chopper/spreader of the harvester, or an immediate stop of the harvesting process.

If, after the controller determined that a blockage has occurred, the controller determines that an amount of crop residue stuck within the harvester has now been dislodged (see Figure 7), the controller may reset one or more of the properties that were previously changed by the controller as a remedial action. In some embodiments, the controller is configured to only reset one harvester property at a time. The controller may reset the property gradually. If, for example, the controller determines that a blockage has been resolved and increases the ground speed of the harvester from a reduced speed to the default harvesting speed, the controller may do so gradually and, at the same time, monitor the flow rate difference between the expected residue output and the actual residue output to ensure that an increase in ground speed of the harvester no longer results in another accrual of residue within the harvester.

### Blockage Location/Severity

The controller may be configured to monitor the residue stream within the combine harvester if the blockage signal is indicative of a current blockage. Such additional monitoring of the residue stream may be used by the controller to determine the severity and/or location of the blockage. Some non-exclusive examples of such additional monitoring are described below.

In one embodiment, the controller may be configured to monitor the change in power and/or torque and/or speed of the spreader. To this end, the controller may be provided with direct or indirect torque/speed measurements of the spreader. For example, if the spreader is hydraulically driven, the controller may be configured to monitor the hydraulic pressure of the hydraulic fluid supply provided to the spreader. A drop in power and/or torque and/or an increase in rpm of the spreader may indicate that no and/or less residue is passing through the spreader, such that there may be a blockage upstream of the spreader. The controller may then generate a warning signal to inform the user (e.g. visually) about the potential blockage upstream of the spreader.

In another embodiment, the controller may be configured to monitor the amount of crop passing through the chopper. To this end, the controller may be configured to receive images from a chop quality sensor (e.g. a chop cam) arranged within the chopper compartment. The controller may then use image recognition techniques to determine an estimated amount of crop residue passing through the chopper compartment on the basis of the images received. In some examples, the controller may determine, on the basis of the images of the chopper compartment, that some or all of the residue within the chopper is not moving at an expected rate. If the controller determines an unexpected reduction of crop flow within the chopper compartment, the controller may generate a warning signal to inform the user that a blockage may have occurred within the chopping compartment.

In another embodiment, the controller may be configured to determine a potential blockage within the chopper compartment on the basis of the power and/or torque and/or speed of the chopper. To this end, the controller may be configured to receive direct or indirect torque and/or speed measurements of the chopper. If the chopper is hydraulically driven, the controller may be configured to monitor the hydraulic pressure of the fluid supply provided to drive the chopper. If the controller determines an unexpected increase in power and/or torque and/or a drop in chopper speed, this may indicate a blockage in the chopper compartment. In order to determine such an unexpected increase in power/torque and decrease in speed, the controller may be configured to compare the power/torque/speed measurements against suitable chopper characteristics thresholds.

In another embodiment, the controller may be configured to monitor the engine parameters of the harvester. In some examples, the controller may be configured to directly or indirectly measure the torque produced by the engine, monitor the fuel consumption, monitor the engine speed, or the noise level of the engine in order to determine if unexpected changes have occurred. If one of the engine parameters monitored by the controller change unexpectedly, i.e. exceed an engine parameter threshold, the controller may generate a blockage status signal that is indicative of a blockage. For example, the controller may monitor the engine load. If the engine load data received by the controller shows an initial decrease in load followed by a sharp rise in load, the controller may determine that a blockage has occurred. This is because the spreader and/or chopper may temporarily require less power as a blockage builds up within the harvester, due to the reduced amount of crop residue being discharged. Shortly thereafter, however, the machine starts to get blocked and the controller may determine a sharp increase in spreader/chopper loads.

In another example, the controller may be configured to monitor the pressure in the cleaning shoe. If the controller determines an unexpected pressure increase in the cleaning shoe, the controller may generate a warning signal to inform the user of a potential accumulation of crop material within the cleaning shoe. To this end, the controller may compare the received pressure measurements to a cleaning shoe pressure threshold. If the pressure measurements exceed the cleaning shoe pressure threshold, the controller may generate the above warning signal.

In another example, the controller may be configured to monitor a spreading pattern of the crop residue stream, particularly if the harvester comprises an active oscillating deflector. To this end, the controller may compare images of a rear camera with a reference residue stream pattern. If the actual residue stream monitored by the camera deviates from the reference residue stream, the controller may generate a warning signal to inform the user that a blockage may have occurred at the oscillating deflector.

In the above description, the additional monitoring of the controller was used to generate warning signals to the operator. However, it is also feasible that the controller is configured to take (additional) remedial action on the basis of such monitoring steps. The controller may, therefore, take more localised remedial action that may be more appropriate to address the cause of the blockage. If the controller determines that the chopper load has increased more than expected, it may temporarily increase the speed of the chopper to try and dislodge the additional crop residue. Should this initial step of remedial action not solve the blockage, the controller may iteratively change other properties of the harvester until the blockage has been eliminated.

### Blockage logging

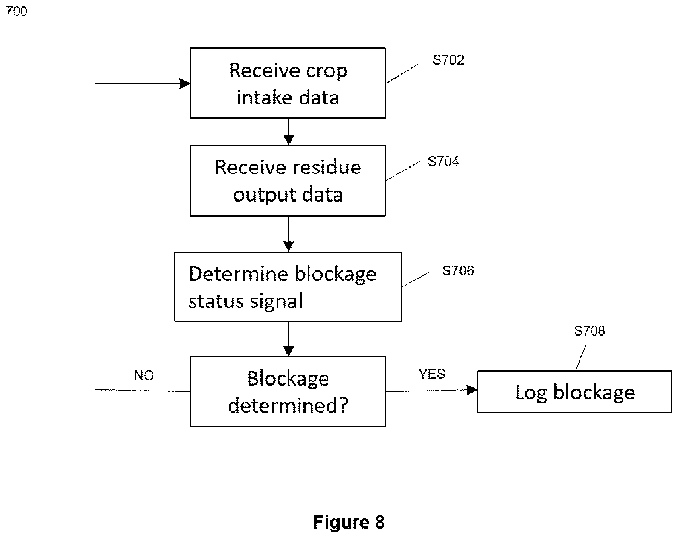

Figure 8 shows another embodiment of the method of controlling a combine harvester according to the present disclosure. The method 700 shown in Figure 8 comprises a first step S702 for receiving crop intake data as outlined above. In a second step S704, the method 700 includes receiving residue output data. In a third step S706, a blockage status signal is determined on the basis of a comparison between the crop intake data and the residue output data.

Compared to the method 200 shown in Figure 3, the method 700 of Figure 8 comprises an additional step S708 that is activated if a blockage is determined, i.e. if the blockage status signal is indicative of a blockage. In one example, step S708 may comprise logging that a blockage has occurred, e.g. together with a corresponding time stamp. The controller may store other data together with the blockage event, such as GPS co-ordinates, the type of crop, crop characteristics (e.g. crop height, humidity, etc.), and environmental conditions (e.g. temperature, humidity), etc. The controller may also store information about the combine harvester itself, such as the combine type and/or model, the header type/model as well as operating parameters of the harvester at the time the blockage occurred. Such operating parameters may include the ground speed of the harvester, header settings, feeder settings, threshing settings, and separation settings. The controller may also record any down time of the combine harvester on the field that was due to a blockage.

The blockage log data can be stored on board of the combine harvester and/or remotely, such as in a cloud storage solution. The blockage log data generated by the controller may be used to determine a training data set. To this end, the blockage log data of various different combine harvesters operating in different locations and/or at different times may be used to generate the training data set. Artificial intelligence can be used to train combine harvesters and determine the estimated likelihood of a blockage occurring in a combine harvester based on the current field and environmental conditions, during operation of the harvester. To this end, a neural network of the combine harvester may be trained to recognise certain parameters of the harvesting operation that may increase the likelihood of a future blockage. If a so trained controller determines an increase in blockage likelihood, the controller may notify the operator or take automatic remedial action, e.g. by reducing the ground speed of the harvester. The remedial action can also be based on the training data, such that the controller will take the most appropriate remedial action based on the current operating parameters.

It will be understood that the training data and blockage log data can be shared between different combines, which is particularly advantageous if a new combine harvester is working on a field that has previously been processed by one or more different harvesters.

The listing or discussion of an apparently prior-published document in this specification should not necessarily be taken as an acknowledgement that the document is part of the state of the art or is common general knowledge.

Preferences and options for a given aspect, feature or value of the invention should, unless the context indicates otherwise, be regarded as having been disclosed in combination with any and all preferences and options for all other aspects, features and parameters of the invention.

## Claims

1. A controller for a harvester (10) configured to:
receive crop intake data (S202) representative of a current or future flow of crop (106) through the harvester (10);
receive residue output data (S204) representative of a flow of crop residue (108) discharged by the harvester (10);
determine a blockage status signal (S206) on the basis of a comparison between the crop intake data and the residue output data, for informing a user of a blockage within the harvester (10) and/or for setting one or more properties of the harvester based on the blockage status signal.

2. The controller of Claim 1, wherein the controller is configured to compare the crop intake data and the residue output data by:
determining, on the basis of the crop intake data, expected residue output data (304) representative of an expected flow of crop residue that should be discharged by the harvester under current working conditions, when processing a flow of crop represented by the crop intake data; and
comparing the residue output data (302) to the expected residue output data (304).

3. The controller of Claim 2, wherein the controller is configured to compare the residue output data (302) to the expected residue output data (304) by:
determining an expected residue output data value (304) on the basis of the crop intake data received at a first time;
determining a time delay value (306) representative of a time required to process a flow of crop represented by the crop intake data until the corresponding crop residues are discharged by the harvester;
determining a residue output data value (302) on the basis of the residue output data received at a second time, said second time being offset from the first time by the time delay; and
comparing the residue output data value to the expected output data value.

4. The controller of any one of Claims 1 to 3, wherein the controller is configured to compare the crop intake data and the residue output data by:
determining a difference (502) between a crop intake data value and a corresponding residue output data value;
comparing the difference (502) to a blockage threshold (504); and
determining a blockage status signal indicative of a blockage within the harvester if the difference exceeds the blockage threshold.

5. The controller of any one of Claims 1 to 4, wherein the crop intake data comprises, or is based on, one or more of:
an engine load of the harvester;
a load on and/or speed of a header (102) auger of the harvester;
a load on and/or speed of a draper belt of the harvester;
a ground speed of the harvester;
a harvesting width of the harvester;
a current feed rate of the harvester;
a flow (rate) of separated grain;
combine location data and field data representative of the crop (106) density in the field being harvested; and
crop characteristic data, such as moisture data.

6. The controller of any one of Claims 1 to 5, wherein the crop intake data comprises left-side data representative of a current or future flow of crop (106) through a left-side of the harvester and right-side data representative of a current or future flow of crop through a right-side of the harvester.

7. The controller of any one of Claims 1 to 6, wherein the residue output data comprises, or is based on, one or more of:
signals and/or images provided by one or more residue sensors;
load acting on a component of a residue spreading system (36) of the harvester (10);
rotor speed and/or torque and/or power of a residue spreading system (36) of the harvester; and
load acting on deflector doors of a residue spreading system (36) of the harvester.

8. The controller of Claim 7, wherein the one or more residue sensors include a radar residue spreading sensor configured to determine a residue spreading coverage.

9. The controller of any one of Claims 1 to 8, wherein the residue output data is provided by a plurality of sensors and wherein the controller is configured to determine a weighted average on the basis of a predetermined weighting factor assigned to each of the residue output data signals provided by the plurality of sensors.

10. The controller of any one of Claims 1 to 9, wherein the controller is configured to change one or more of the following harvester properties if the blockage status signal is indicative of a blockage within the harvester (10):
a ground speed of the harvester;
speed of a chopper (26) of the harvester;
speed of a spreader (36) of the harvester; and
a position of spreader doors of the harvester.

11. The controller of any one of Claims 1 to 10, wherein the controller is configured to create a log instance (S708) when the blockage status signal is indicative of a blockage within the harvester (10), wherein the log preferably comprises one or more of the following:
GPS coordinates of the harvester;
time and date information;
crop characteristics;
field data representative of ground contours of the work area;
environmental conditions;
harvester type/model; and
harvester operating parameters.

12. The controller of any one of Claims 1 to 11, wherein the controller is configured to:
determine an amount of crop residue that has accumulated in the harvester (10) if the blockage status signal is indicative of a blockage within the harvester;
monitor if previously accumulated crop residues have been discharged by the harvester; and
set one or more properties of the harvester that have previously been changed in response to a blockage status signal that is indicative of a blockage within the harvester to a default value if the accumulated crop residues have been discharged by the harvester.

13. The controller of any one of Claims 1 to 12, wherein the controller is configured to:
inform the user of the harvester (10) based on the blockage status signal by providing a notification to the user on a display.

14. A harvester (10) comprising a controller according to any one of Claims 1 to 13.

15. A method of controlling a harvester (10) comprising:
receiving crop intake data (S202) representative of a current or future flow of crop (106) through the harvester (10);
receiving residue output data (S204) representative of a flow of crop residue (108) discharged by the harvester (10);
determining a blockage status signal (S206) on the basis of a comparison between the crop intake data and the residue output data;
setting one or more properties of the harvester based on the blockage status signal.

## Patentansprüche

1. Steuerung für einen Mähdrescher (10), die konfiguriert ist zum:
Empfangen von Erntegutaufnahmedaten (S202), die für einen aktuellen oder zukünftigen Strom von Erntegut (106) durch den Mähdrescher (10) repräsentativ sind;
Empfangen von Rückstandsausgabedaten (S204), die repräsentativ für einen Strom von Ernterückständen (108) sind, der von dem Mähdrescher (10) ausgeworfen wird;
Bestimmen eines Verstopfungsstatussignals (S206) auf der Grundlage eines Vergleichs zwischen den Erntegutaufnahmedaten und den Rückstandsausgabedaten, um einen Benutzer über eine Verstopfung innerhalb des Mähdreschers (10) zu informieren und/oder um eine oder mehrere Eigenschaften des Mähdreschers basierend auf dem Verstopfungsstatussignal einzustellen.

2. Steuerung nach Anspruch 1, wobei die Steuerung dazu konfiguriert ist, die Erntegutaufnahmedaten und die Rückstandsausgabedaten zu vergleichen durch:
Bestimmen, auf der Grundlage der Erntegutaufnahmedaten, von erwarteten Rückstandsausgabedaten (304), die repräsentativ für einen erwarteten Strom von Ernterückständen sind, der von dem Mähdrescher unter aktuellen Arbeitsbedingungen abgegeben werden sollte, wenn ein durch die Erntegutaufnahmedaten dargestellter Strom von Erntegut verarbeitet wird; und
Vergleichen der Rückstandsausgabedaten (302) mit den erwarteten Rückstandsausgabedaten (304).

3. Steuerung nach Anspruch 2, wobei die Steuerung dazu konfiguriert ist, die Rückstandsausgabedaten (302) mit den erwarteten Rückstandsausgabedaten (304) zu vergleichen durch:
Bestimmen eines erwarteten Rückstandsausgabedatenwerts (304) auf der Grundlage der zu einem ersten Zeitpunkt empfangenen Erntegutaufnahmedaten;
Bestimmen eines Zeitverzögerungswerts (306), der für eine Zeit repräsentativ ist, die erforderlich ist, um einen durch die Erntegutaufnahmedaten repräsentierten Erntegutstrom zu verarbeiten, bis die entsprechenden Ernterückstände von dem Mähdrescher ausgeworfen werden;
Bestimmen eines Rückstandsausgabedatenwerts (302) auf der Grundlage der zu einem zweiten Zeitpunkt empfangenen Rückstandsausgabedaten, wobei der zweite Zeitpunkt gegenüber dem ersten Zeitpunkt um die Zeitverzögerung versetzt ist; und
Vergleichen des Rückstandsausgabedatenwerts mit dem erwarteten Ausgabedatenwert.

4. Steuerung nach einem der Ansprüche 1 bis 3, wobei die Steuerung dazu konfiguriert ist, die Erntegutaufnahmedaten und die Rückstandsausgabedaten zu vergleichen durch:
Bestimmen einer Differenz (502) zwischen einem Erntegutaufnahmedatenwert und einem entsprechenden Rückstandsausgabedatenwert;
Vergleichen der Differenz (502) mit einem Verstopfungsschwellenwert (504) und
Bestimmen eines Verstopfungsstatussignals, das eine Verstopfung innerhalb des Mähdreschers anzeigt, wenn die Differenz den Verstopfungsschwellenwert überschreitet.

5. Steuerung nach einem der Ansprüche 1 bis 4, wobei die Erntegutaufnahmedaten eines oder mehrere der folgenden umfassen oder darauf basieren:
eine Motorlast des Mähdreschers;
eine Belastung an und/oder Geschwindigkeit einer Schnecke einer Zuleitung (102) des Mähdreschers;
eine Belastung an und/oder Geschwindigkeit eines Schneidwerkbands des Mähdreschers;
eine Bodengeschwindigkeit des Mähdreschers;
eine Erntebreite des Mähdreschers;
eine aktuelle Förderrate des Mähdreschers;
eine Strömung (Rate) von getrenntem Korn;
Kombinieren von Standortdaten und Felddaten, die für die Dichte des Ernteguts (106) in dem zu erntenden Feld repräsentativ sind; und
Ernteguteigenschaftsdaten, wie Feuchtigkeitsdaten.

6. Steuerung nach einem der Ansprüche 1 bis 5, wobei die Erntegutaufnahmedaten linksseitige Daten, die einen aktuellen oder zukünftigen Strom von Erntegut (106) durch eine linke Seite des Mähdreschers repräsentieren, und rechtsseitige Daten, die einen aktuellen oder zukünftigen Strom von Erntegut durch eine rechte Seite des Mähdreschers repräsentieren, umfassen.

7. Steuerung nach einem der Ansprüche 1 bis 6, wobei die Rückstandsausgabedaten eines oder mehrere von Folgendem umfassen oder darauf basieren:
Signale und/oder Bilder, die von einem oder mehreren Rückstandssensoren bereitgestellt werden;
auf eine Komponente eines Rückstandsverteilsystems (36) des Mähdreschers (10) wirkende Last;
Rotordrehzahl und/oder Drehmoment und/oder Leistung eines Rückstandsverteilsystems (36) des Mähdreschers; und
Last, die auf Ablenkklappen eines Rückstandsverteilsystems (36) des Mähdreschers wirkt.

8. Steuerung nach Anspruch 7, wobei der eine oder die mehreren Rückstandssensoren einen Radar-Rückstandsverteilungssensor einschließen, der konfiguriert ist, um eine Rückstandsverteilungsabdeckung zu bestimmen.

9. Steuerung nach einem der Ansprüche 1 bis 8, wobei die Rückstandsausgabedaten von einer Vielzahl von Sensoren bereitgestellt werden und wobei die Steuerung konfiguriert ist, um einen gewichteten Durchschnitt auf der Basis eines vorbestimmten Gewichtungsfaktors zu bestimmen, der jedem der Rückstandsausgabedatensignale zugeordnet ist, die von der Vielzahl von Sensoren bereitgestellt werden.

10. Steuerung nach einem der Ansprüche 1 bis 9, wobei die Steuerung dazu konfiguriert ist, eine oder mehrere der folgenden Mähdreschereigenschaften zu ändern, wenn das Verstopfungsstatussignal eine Verstopfung innerhalb des Mähdreschers (10) anzeigt:
eine Bodengeschwindigkeit des Mähdreschers;
Geschwindigkeit eines Häckslers (26) des Mähdreschers;
Geschwindigkeit eines Verteilers (36) des Mähdreschers und
eine Position von Verteilerklappen des Mähdreschers.

11. Steuerung nach einem der Ansprüche 1 bis 10, wobei die Steuerung konfiguriert ist, um eine Protokollinstanz (S708) zu erstellen, wenn das Verstopfungsstatussignal eine Verstopfung innerhalb des Mähdreschers (10) anzeigt, wobei das Protokoll vorzugsweise eines oder mehrere der folgenden umfasst:
GPS-Koordinaten des Mähdreschers;
Zeit- und Datumsinformationen;
Ernteguteigenschaften;
Felddaten, die für Bodenkonturen des Arbeitsbereichs repräsentativ sind;
Umgebungsbedingungen;
Mähdreschertyp/-modell und
Mähdrescher-Betriebsparameter.

12. Steuerung nach einem der Ansprüche 1 bis 11, wobei die Steuerung konfiguriert ist zum:
Bestimmen einer Menge an Ernterückständen, die sich in dem Mähdrescher (10) angesammelt hat, wenn das Verstopfungsstatussignal eine Verstopfung innerhalb des Mähdreschers anzeigt;
Überwachen, ob zuvor angesammelte Ernterückstände von dem Mähdrescher abgegeben worden sind; und
Einstellen einer oder mehrerer Eigenschaften des Mähdreschers, die zuvor als Reaktion auf ein Verstopfungsstatussignal, das eine Verstopfung innerhalb des Mähdreschers anzeigt, geändert wurden, auf einen Standardwert, wenn die angesammelten Ernterückstände durch den Mähdrescher ausgeworfen wurden.

13. Steuerung nach einem der Ansprüche 1 bis 12, wobei die Steuerung konfiguriert ist zum:
Informieren des Benutzers des Mähdreschers (10) basierend auf dem Verstopfungsstatussignal durch Bereitstellung einer Benachrichtigung an den Benutzer auf einer Anzeige.

14. Mähdrescher (10), der eine Steuerung nach einem der Ansprüche 1 bis 13 umfasst.

15. Verfahren zum Steuern eines Mähdreschers (10), umfassend:
Empfangen von Erntegutaufnahmedaten (S202), die für einen aktuellen oder zukünftigen Strom von Erntegut (106) durch den Mähdrescher (10) repräsentativ sind;
Empfangen von Rückstandsausgabedaten (S204), die repräsentativ für einen Strom von Ernterückständen (108) sind, der von dem Mähdrescher (10) ausgeworfen wird;
Bestimmen eines Verstopfungsstatussignals (S206) auf der Grundlage eines Vergleichs zwischen den Erntegutaufnahmedaten und den Rückstandsausgabedaten;
Einstellen einer oder mehrerer Eigenschaften des Mähdreschers basierend auf dem Verstopfungsstatussignal.

## Revendications

1. Dispositif de commande destiné à une moissonneuse (10) configuré pour :
recevoir des données d'admission de récolte (S202) représentant un flux actuel ou futur de récolte (106) par le biais de la moissonneuse (10) ;
recevoir des données de sortie de résidus (S204) représentant un flux de résidus de récolte (108) rejeté par la moissonneuse (10) ;
déterminer un signal d'état de blocage (S206) sur la base d'une comparaison entre les données d'admission de récolte et les données de sortie de résidus, pour informer un utilisateur d'un blocage au sein de la moissonneuse (10) et/ou pour définir une ou plusieurs propriétés de la moissonneuse sur la base du signal d'état de blocage.

2. Dispositif de commande selon la revendication 1, dans lequel le dispositif de commande est configuré pour comparer les données d'admission de récolte et les données de sortie de résidus par :
la détermination, sur la base des données d'admission de récolte, de données de sortie de résidus attendues (304) représentant un flux attendu de résidus de récolte qui doit être rejeté par la moissonneuse dans des conditions de travail actuelles, lors d'un traitement d'un flux de récolte représenté par les données d'admission de récolte ; et
la comparaison des données de sortie de résidus (302) aux données de sortie de résidus attendues (304).

3. Dispositif de commande selon la revendication 2, dans lequel le dispositif de commande est configuré pour comparer les données de sortie de résidus (302) aux données de sortie de résidus attendues (304) par :
la détermination d'une valeur de données de sortie de résidus attendue (304) sur la base des données d'admission de récolte reçues à un premier moment ;
la détermination d'une valeur de délai (306) représentant un temps nécessaire pour traiter un flux de récolte représenté par les données d'admission de récolte jusqu'à ce que les résidus de récolte correspondants soient rejetés par la moissonneuse ;
la détermination d'une valeur de données de sortie de résidus (302) sur la base des données de sortie de résidus reçues à un second moment, ledit second moment étant décalé par rapport au premier moment par le délai ; et
la comparaison de la valeur de données de sortie de résidus à la valeur de données de sortie attendue.

4. Dispositif de commande selon l'une quelconque des revendications 1 à 3, dans lequel le dispositif de commande est configuré pour comparer les données d'admission de récolte et les données de sortie de résidus par :
la détermination d'une différence (502) entre une valeur de données d'admission de récolte et une valeur de données de sortie de résidus correspondante ;
la comparaison de la différence (502) à un seuil de blocage (504) ; et
la détermination d'un signal d'état de blocage indiquant un blocage au sein de la moissonneuse si la différence dépasse le seuil de blocage.

5. Dispositif de commande selon l'une quelconque des revendications 1 à 4, dans lequel les données d'admission de récolte comprennent, ou sont basées sur, un ou plusieurs parmi :
une charge de moteur de la moissonneuse ;
une charge sur et/ou une vitesse d'une vis sans fin (102) de la moissonneuse ;
une charge sur et/ou une vitesse d'un tapis convoyeur de la moissonneuse ;
une vitesse au sol de la moissonneuse ;
une largeur de moissonnage de la moissonneuse ;
une vitesse d'alimentation actuelle de la moissonneuse ;
un flux (débit) de grains séparés ;
des données d'emplacement combinées et des données de champ représentant la densité de récolte (106) dans le champ en cours de moissonnage ; et
des données de caractéristiques de récolte, telles que des données d'humidité.

6. Dispositif de commande selon l'une quelconque des revendications 1 à 5, dans lequel les données d'admission de récolte comprennent des données de côté gauche représentant un flux actuel ou futur de récolte (106) à travers un côté gauche de la moissonneuse et des données de côté droit représentant un flux actuel ou futur de récolte à travers un côté droit de la moissonneuse.

7. Dispositif de commande selon l'une quelconque des revendications 1 à 6, dans lequel les données de sortie de résidus comprennent, ou sont basées sur, un ou plusieurs parmi :
des signaux et/ou des images fournis par un ou plusieurs capteurs de résidus ;
une charge agissant sur une composante d'un système de dispersion de résidus (36) de la moissonneuse (10) ;
une vitesse de rotor et/ou un couple et/ou une puissance d'un système de dispersion de résidus (36) de la moissonneuse ; et
une charge agissant sur des volets déflecteurs d'un système de dispersion de résidus (36) de la moissonneuse.

8. Dispositif de commande selon la revendication 7, dans lequel le ou les capteurs de résidus comportent un capteur de dispersion de résidus radar configuré pour déterminer une couverture de dispersion de résidus.

9. Dispositif de commande selon l'une quelconque des revendications 1 à 8, dans lequel les données de sortie de résidus sont fournies par une pluralité de capteurs et dans lequel le dispositif de commande est configuré pour déterminer une moyenne pondérée sur la base d'un facteur de pondération prédéterminé attribué à chacun des signaux de données de sortie de résidus fournis par la pluralité de capteurs.

10. Dispositif de commande selon l'une quelconque des revendications 1 à 9, dans lequel le dispositif de commande est configuré pour modifier une ou plusieurs des propriétés de moissonneuse suivantes si le signal d'état de blocage indique un blocage au sein de la moissonneuse (10) :
une vitesse au sol de la moissonneuse ;
une vitesse d'un hacheur (26) de la moissonneuse ;
une vitesse d'un épandeur (36) de la moissonneuse ; et
une position des portes d'épandeur de la moissonneuse.

11. Dispositif de commande selon l'une quelconque des revendications 1 à 10, dans lequel le dispositif de commande est configuré pour créer une instance de journal (S708) lorsque le signal d'état de blocage indique un blocage au sein de la moissonneuse (10), dans lequel le journal comprend de préférence un ou plusieurs parmi les éléments suivants :
des coordonnées GPS de la moissonneuse ;
des informations d'heure et de date ;
des caractéristiques de récolte ;
des données de champ représentant des contours de sol de la région de travail ;
des conditions environnementales ;
un type/modèle de moissonneuse ; et
des paramètres de fonctionnement de moissonneuse.

12. Dispositif de commande selon l'une quelconque des revendications 1 à 11, dans lequel le dispositif de commande est configuré pour :
déterminer une quantité de résidus de récolte qui se sont accumulés dans la moissonneuse (10) si le signal d'état de blocage indique un blocage au sein de la moissonneuse ;
surveiller si des résidus de récolte accumulés précédemment ont été rejetés par la moissonneuse ; et
définir une ou plusieurs propriétés de la moissonneuse qui ont été précédemment modifiées en réponse à un signal d'état de blocage indiquant un blocage au sein de la moissonneuse sur une valeur par défaut si les résidus de récolte accumulés ont été rejetés par la moissonneuse.

13. Dispositif de commande selon l'une quelconque des revendications 1 à 12, dans lequel le dispositif de commande est configuré pour :
informer l'utilisateur de la moissonneuse (10) sur la base du signal d'état de blocage en fournissant une notification à l'utilisateur sur une unité d'affichage.

14. Moissonneuse (10) comprenant un dispositif de commande selon l'une quelconque des revendications 1 à 13.

15. Procédé permettant de commander une moissonneuse (10) comprenant :
la réception de données d'admission de récolte (S202) représentant un flux actuel ou futur de récolte (106) par le biais de la moissonneuse (10) ;
la réception de données de sortie de résidus (S204) représentant un flux de résidus de récolte (108) rejeté par la moissonneuse (10) ;
la détermination d'un signal d'état de blocage (S206) sur la base d'une comparaison entre les données d'admission de récolte et les données de sortie de résidus ;
la définition d'une ou plusieurs propriétés de la moissonneuse sur la base du signal d'état de blocage.
